# EUROPEAN PATENT APPLICATION

(11) **EP 4 631 632 A1**
(43) Date of publication of application: **15.10.2025**
(21) Application number: 24169544.4
(22) Date of filing: 10.04.2024
(51) Int. Cl.: B08B 3/02, A47L 15/50, B08B 11/02, F16K 11/085

(54) **CONFIGURABLE TROLLEY FOR WASHING MEDICAL ARTICLES AND APPARATUS INCLUDING IT**

(71) Applicant: Bonferraro S.p.A., 37060 Bonferraro (VR) (IT)
(72) Inventor: GOBBI, Ezio, Roncoferraro MN (IT); BENFATTI, Oscar, Isola della Scala VR (IT); PIAZZA, Damiano, Nogara VR (IT)
(74) Representative: Concone, Emanuele

(57) **Abstract**

A trolley for a washing apparatus includes a structure (3) carrying a supply pipe (5) extending from the rear side of the trolley to the central inlet of a selector (6) attached in the center of the structure (3) and provided with two side outlets to which two manifolds (7, 7') are removably connected, the selector (6) being provided with a single shutter that alternately closes one of the two side outlets partially or fully, the supply tube (5) and the selector (6) being fixed to the structure (3) so that they can be easily removed.

## Description

The present invention relates to apparatuses for the washing and possible thermodisinfection of articles used in the medical field such as tubes, catheters, probes and the like, and in particular to a trolley that can take different configurations depending on the type and quantity of articles to be washed.

It is well known that this type of apparatus is basically structured as a dishwasher with a plurality of pull-out trolleys, on which the items to be washed are loaded, each of which includes a supply pipe that connects to one of the water outlets arranged in the wash tank at different heights along a central vertical water supply duct. However, unlike a conventional dishwasher, said pipe does not feed a rotating sprayer but a central selector from which branch off two manifolds equipped with a plurality of nozzles arranged and shaped in various ways according to the items to be washed.

To adapt the trolley to different loads of articles, both in type and number, it is already known to provide for multiple configurations of the trolley that can be achieved by removing or replacing one or both manifolds. For this purpose, the central selector is provided with means to close one or both outlets to the manifolds, so that the trolley can take one of four basic configurations: both manifolds, left manifold only, right manifold only, no manifold. The latter configuration can be useful when washing bulky items or items unsuitable for the type of manifolds available, for which washing is done by a traditional rotating sprayer placed at the bottom of the wash tank.

The shutter means currently used to close the central selector outlets are of two types: guillotine or flap. As for the guillotine shutter, it must be opened manually when the relevant manifold is connected, while it closes automatically under the action of a spring when the manifold is disconnected from the selector. An example of a guillotine shutter, although applied to an outlet of the supply duct instead of an outlet of the trolley selector, is shown in EP 3037108.

This type of shutter has several drawbacks, as it does not provide a good seal, requires manual opening, is rather bulky, and has elements outside the selector that can be struck during loading and unloading of the trolley, with the risk of damaging the shutter.

In the case of a flap shutter, it can be hinged at the top inside the selector at the outlet to be closed and rests by gravity on a relative seat, or it can be mounted on a central pin for axial sliding along said pin. Opening of the flap is accomplished automatically by the inlet of the manifold when it is connected to the selector by pushing the flap inward, and closing is accomplished by gravity or by water push or by a spring when the manifold is disconnected. In the case of the hinged flap, the seat is preferably inclined so that its upper end where the flap is hinged is downstream from its lower end when the direction of water flow is considered. In this way, the weight force acting on the shutter has a component orthogonal to the seat that improves the seal.

This type of shutter prevents some of the problems of the guillotine shutter because it is more compact, has no elements outside the selector and does not require manual opening, but it still has drawbacks. In fact, it too does not provide a good seal, and in case of malfunction the operator cannot detect the problem because it is not visible from the outside. For example, the hinged flap could become partially or totally detached from its seat while the sliding flap could become stuck on the pin, so that the shutter would no longer close the outlet causing a sharp drop in water pressure that would result in inadequate washing by the connected other manifold.

An additional drawback common to both of the above-mentioned known solutions stems from the fact that the selector and the pipe connecting it to the supply duct are fixedly mounted on the trolley, which has a twofold disadvantage. First, it is not possible to completely clear the surface of the trolley even if both manifolds are removed, and second, the selector must include two shutters to close both outlets if both manifolds are removed, otherwise the aforementioned problem of sharp drop in water pressure would still occur.

It is therefore the purpose of the present invention to provide a trolley that overcomes these drawbacks. Said purpose is achieved by means of a trolley in which the central selector is provided with a single shutter capable of alternately closing one of the two outlets, and is mounted on the trolley so that it can be easily removed together with its supply pipe. Other advantageous features of the present trolley are specified in the dependent claims.

The main advantage of the trolley according to the present invention is that it is more economical and reliable, since the structure of the central selector is simpler and sturdier.

A second important advantage of this trolley comes from the possibility of total removal of the water distribution components (pipe, selector, manifolds) so that the supporting structure is left completely free.

Still another advantage of the aforementioned trolley, in its preferred embodiment, is to provide a better shutter seal so as to reduce water waste and improve washing performance. In addition, a partial opening of one of the outlets can be achieved, unlike in the prior art that always implies a full opening, so as to reduce the flow to one of the manifolds should it be necessary for washing particularly delicate items that require less water pressure.

These and other advantages and features of the trolley according to the present invention will be apparent to those skilled in the art from the following detailed description of an embodiment thereof, with reference to the attached drawings in which:
Fig.1 is a front perspective view of a washing apparatus suitable for receiving the trolley;
Fig.2 is a top perspective view of the trolley with the left manifold mounted and the right manifold yet to be mounted;
Fig.3 is an exploded view of the central selector in a vertical section taken along the midplane including the axis of the supply pipe;
Fig.4 is the same view as Fig.3, but in the assembled condition;
Figs.5A-5C are horizontal sectional views of the selector along the V-V line of Fig.4, with the shutter in three different operating positions;
Figs.6A-6C are top plan views of the selector in Fig.4, with the shutter in the same three different operating positions as in Figs.5A-5C; and
Fig.7 is a top perspective view of the trolley without manifolds and with the selector-pipe assembly yet to be mounted.

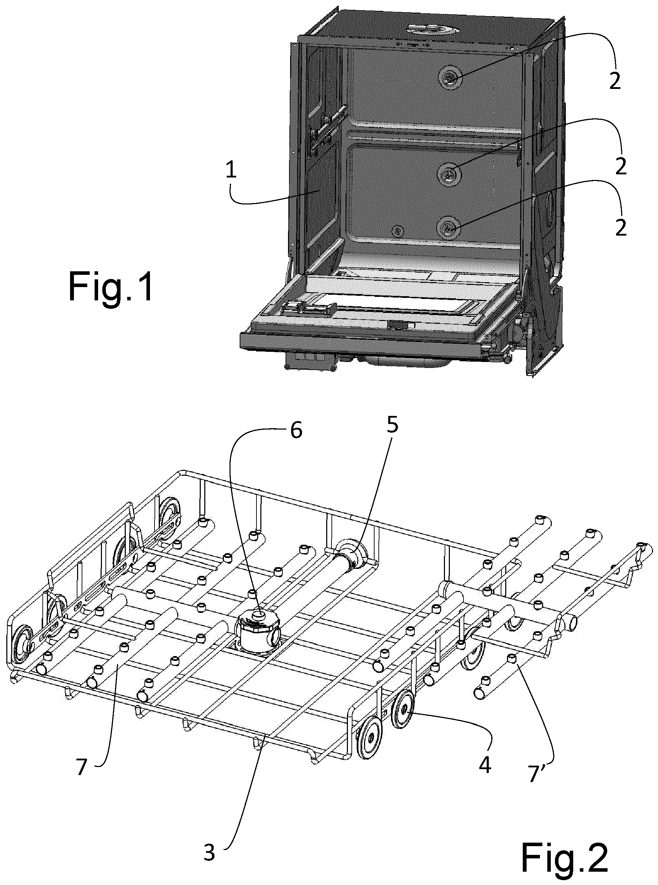

Referring to Figures 1 and 2, it can be seen that a washing apparatus traditionally includes a wash tank 1 in which the back wall has three water outlets 2 located at different heights along a central vertical duct, to supply water to the water distribution components mounted on the wire frame 3 of a trolley equipped with side casters 4 to move into/out of tank 1. Each outlet 2 is closed by a spring-loaded shutter that opens when pushed by a corresponding inlet of a supply pipe 5 located on the trolley, so that water is delivered only through the outlets 2 to which the trolleys in the wash tank 1 are connected.

The supply pipe 5 extends from the rear side of the trolley to the central inlet of a selector 6 arranged substantially in the center of structure 3 and provided with two side outlets to which a left manifold 7, shown mounted in the working position, and a right manifold 7', shown in the removed position, are removably connected.

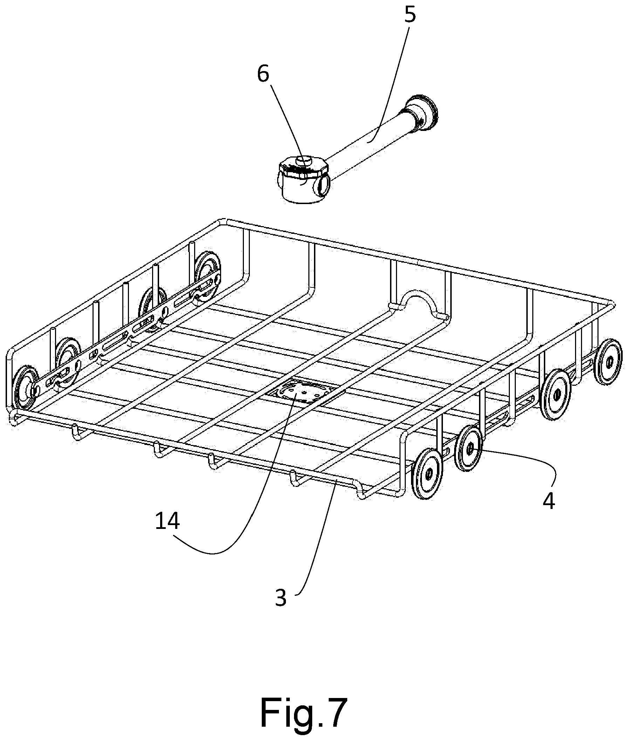

As mentioned above, the innovative aspect of the trolley according to the present invention lies in the fact that selector 6 has a single shutter that can alternately close one of the two side outlets partially or fully, and all components 5, 6, 7, 7' used for water distribution can be easily removed from structure 3 to leave the surface of the trolley completely free (Fig.7).

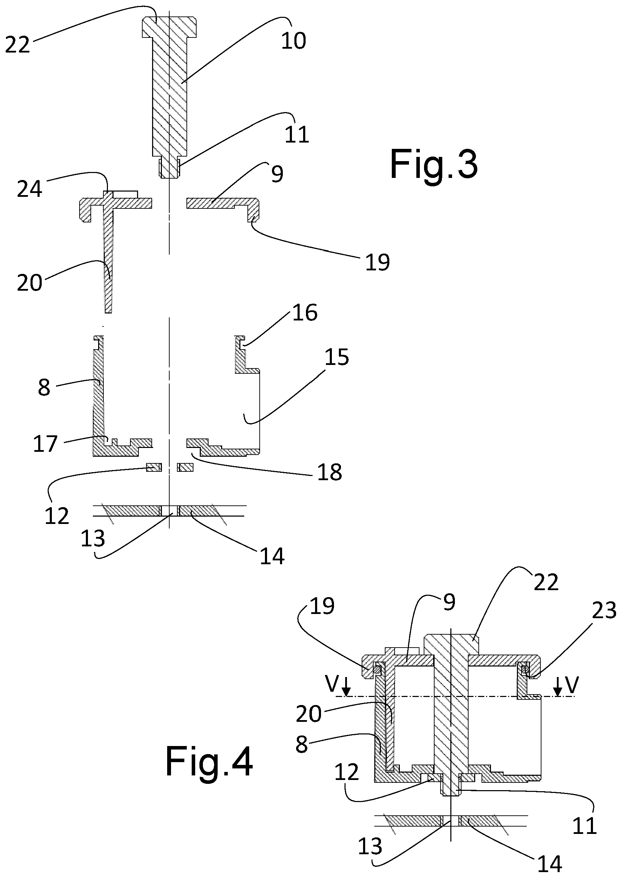

In the preferred embodiment illustrated in figures 3-7, selector 6 consists of a substantially cylindrical body 8 open at the top that is closed by a cover 9 secured thereto by a pin 10 passing through corresponding holes formed in elements 8, 9. Said pin 10 is provided with a lower threaded shank 11 that engages a nut 12, located below body 8, and is preferably long enough to also engage a threaded hole 13 formed in an underlying plate 14 integral with the trolley structure 3.

More specifically, body 8 has a central inlet 15 for the supply tube 5, as well as preferably an outer seat 16 for an O-ring 23 (Fig.4) near its top, an inner groove 17 on the bottom along the side wall and a central outer recess 18 on the bottom suitable for accommodating nut 12, so that the bottom of body 8 preferably rests on plate 14. Cover 9 preferably has a peripheral edge 19 that extends downward enough to cooperate with O-ring 23 to provide a good seal between body 8 and cover 9.

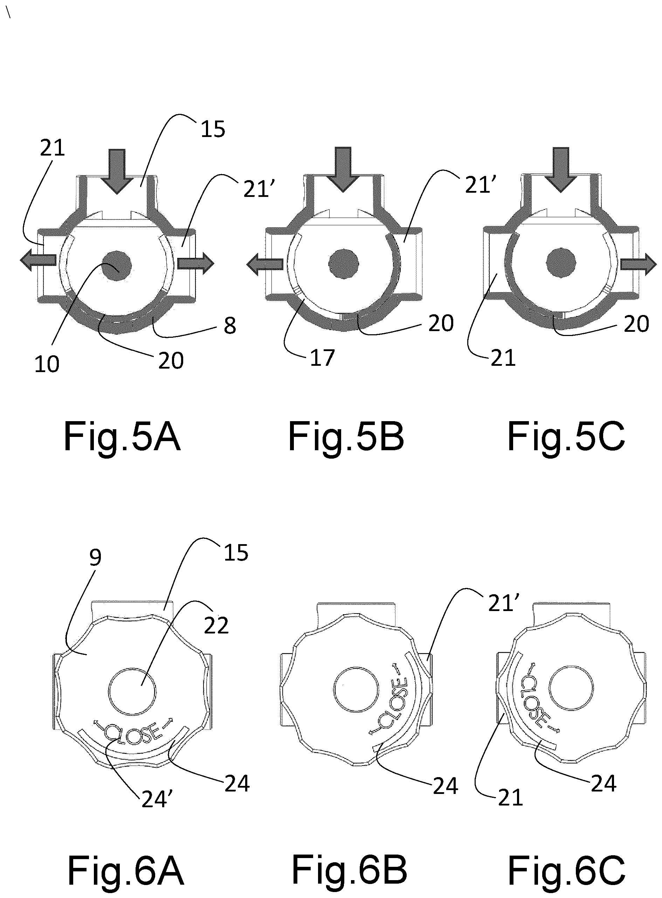

An arcuate shutter 20 following the inner contour of body 8 extends downward from cover 9 preferably until fitting into the bottom groove 17, and the extension in the circumferential direction of said shutter 20 is sufficient to close one of the side outlets 21, 21' of body 8 (Figs.5B, 5C) but also to leave them fully open when shutter 20 is arranged between them (Fig.5A).

In the light of the above description, the simple and effective operation of the trolley according to the invention is immediately understandable.

In the assembled condition of the central selector illustrated in Fig.4, cover 9 is firmly joined to body 8 by pin 10, whose head 22 rests on cover 9 and whose threaded shank 11 engages nut 12 that acts as a "counter-head" in recess 18. In this condition, the selector (together with the supply pipe 5 inserted in inlet 15) is attached to structure 3 of the trolley by screwing the protruding part of shank 11 into the threaded hole 13 of plate 14, acting on the pin head 22, which is preferably knurled or otherwise provided with means to facilitate the operator's grip (e.g., lugs). After that, manifolds 7, 7' can be connected to the corresponding side outlets 21, 21' of body 8 and the trolley is ready for insertion into the wash tank 1.

To select one of the three operating positions shown in Figures 5A-5C, it is sufficient to turn cover 9 clockwise or counterclockwise depending on which outlets are to remain open. To ensure that shutter 20 is properly arranged at the outlet that is intended to be closed, the selector preferably includes end stop means and/or indicator means that externally show the position of the shutter.

For example, in the preferred embodiment shown in the figures the end stop means are the ends of groove 17 that extends beyond the side outlets 21, 21' but is not present at inlet 15. In this way, starting from the middle position of shutter 20 that keeps both outlets 21, 21' open (Fig.5A), turning the cover counterclockwise until shutter 20 reaches the right end of groove 17 closes the right outlet 21' (Fig.5B), and turning the cover clockwise until shutter 20 reaches the left end of groove 17 closes the left outlet 21 (Fig.5C). Of course, the end stop means can be different from the ends of groove 17, e.g., stops protruding internally from body 8 in the areas between inlet 15 and outlets 21, 21'.

As an alternative to end stop means, or in combination therewith, indicator means such as those shown in Figures 6A-6C can be provided. For example, a rib 24 extending upward from cover 9 at shutter 20, as if it were a continuation thereof on the outside, so that it is immediately obvious to the operator in which position shutter 20 is located. Similarly, as an alternative to rib 24, or in combination therewith, a lettering 24' extending at shutter 20 may be used.

If both manifolds 21, 21' are removed, it is sufficient to partially unscrew pin 10, acting on head 22, so that the threaded stem 11 disengages from hole 13 but not from nut 12, so that all components 5, 6, 7, 7' leave structure 3 free while keeping selector 6 in an assembled condition (Fig.7).

It is clear that the embodiment of the trolley according to the invention described and illustrated above is only an example susceptible to many variations. In particular, the exact type and arrangement of the shutter, the outlets, the means of attachment to the trolley structure, and any end stop and/or position indication means could be varied according to specific constructional requirements, realizing variations that are within the reach of a person skilled in the art based on the description given above and the inventive concept illustrated.

For example, the shutter could still be moved by rotation of cover 9 clockwise or counterclockwise, but instead of following the profile of the body 8 it could be a simple vertical septum that diverts all the water to either side outlet and remains in the central position when both outlets are to be opened. In practice, the bottom groove would have an essentially hourglass shape (or like two opposing pie slices joined at the tip) centered on the inlet.

Similarly, the shutter could also be moved by translation instead of rotation, for example, if it were shaped like an inverted V with the tip centered on inlet 15 and the side outlets of body 8 shaped obliquely according to the sides of the V shape, so that translation to the left or right would close the corresponding outlet and in the central position the water would be diverted to both outlets.

In addition, with any type of shutter, the cover might also not move relative to the body, since the shutter might be movable relative to the cover. Finally, additional gaskets could be placed internally around the side outlets to improve the sealing of the shutter, with the location and shape of the gaskets being specific to the type of shutter.

The means of keeping selector 6 assembled and attaching it to structure 3 could also be different from pin 10 and plate 14 with the threaded hole 13. For example, in order to avoid the through-holes for pin 10 in body 8 and cover 9, the coupling between them could be achieved by elastic teeth that extend from the peripheral edge 19 and engage a corresponding outer peripheral rib of body 8 that protrudes below seat 16. Similarly, attaching the assembled selector on structure 3 could be achieved by elastic teeth that extend inferiorly from body 8 and engage corresponding hooks or directly the metal wires of structure 3.

## Claims

1. A trolley for a washing apparatus, comprising a structure (3) carrying a supply pipe (5) extending from the rear side of said trolley to a central inlet (15) of a selector (6) attached substantially in the center of said structure (3) and provided with two side outlets (21, 21') to which two manifolds (7, 7') are removably connected, said selector (6) being provided with means for closing said side outlets (21, 21'), **characterized in that** the selector (6) is provided with a single shutter capable of alternately closing one of the two side outlets (21, 21') in a partial or total manner, **and in that** it includes means for attaching said supply pipe (5) and selector (6) to the structure (3) so that they can be easily removed from the structure (3).

2. Trolley according to claim 1, **characterized in that** the selector (6) comprises a substantially cylindrical body (8) open at the top which is closed by a cover (9), the central inlet (15) and side outlets (21, 21') being formed in said body (8).

3. Trolley according to claim 2, **characterized in that** the shutter extends inferiorly from the cover (9) and the movement of the shutter in its different operating positions is achieved by rotation of the cover (9) relative to the body (8) in clockwise and counterclockwise directions.

4. Trolley according to claim 3, **characterized in that** the shutter is an arcuate shutter (20) that follows the inner contour of the body (8), and its extension in the circumferential direction is sufficient to close one of the side outlets (21, 21') but also to leave them both fully open when said arcuate shutter (20) is arranged between them.

5. Trolley according to any of claims 2 to 4, **characterized in that** the cover (9) is attached to the body (8) by means of a pin (10) passing through corresponding holes formed in said elements (8, 9), said pin (10) being provided with a lower threaded shank (11) engaging a nut (12) located below the body (8), said threaded shank (11) preferably being long enough to also engage a threaded hole (13) formed in a plate (14) integral with the structure (3) of the carriage.

6. Trolley according to claim 5, **characterized in that** the body (8) has a central outer recess (18) at the bottom suitable to accommodate the nut (12), so that the bottom of the body (8) rests on the plate (14).

7. Trolley according to claim 5 or 6, **characterized in that** the pin (10) has a head (22) provided with means for facilitating gripping, preferably a knurling or lugs.

8. Trolley according to any of claims 2 to 7, **characterized in that** the body (8) has an outer seat (16) for an O-ring (23) near its top, and the cover (9) has a peripheral edge (19) extending downward enough to cooperate with said O-ring (23).

9. Trolley according to any of the preceding claims, **characterized by** further comprising end stop means configured to limit the movement of the shutter and/or indicator means externally displaying the position of the shutter.

10. Trolley according to the preceding claim, **characterized in that** the lower end of the shutter fits into a groove (17) formed in the bottom of the body (8), the ends of said groove (17) acting as end stop means.

11. Trolley according to claim 9 or 10, **characterized in that** the indicator means consist of a rib (24) extending upward from the cover (9) at the shutter as if it were a continuation thereof on the outside and/or a lettering (24') extending at the shutter.

12. Washing apparatus, **characterized by** comprising one or more trolleys according to any of the preceding claims.
